# EUROPÄISCHE PATENTSCHRIFT

(11) **EP 1 667 856 B1**
(45) Veröffentlichungstag und Bekanntmachung des Hinweises auf die Patenterteilung: **19.06.2019**
(21) Anmeldenummer: 04765022.1
(22) Anmeldetag: 10.09.2004
(51) Int. Cl.: F02B 33/44, B60C 23/00, F02B 37/24

(54) **REIFENDRUCKEINSTELLANLAGE**
TYRE PRESSURE REGULATING SYSTEM
SYSTEME DE REGULATION DE LA PRESSION DE PNEUS

(30) Priorität: 20.09.2003 DE 10343621
(43) Veröffentlichungstag der Anmeldung: 14.06.2006
(73) Patentinhaber: Deere & Company, Moline, IL 61265 (US)
(72) Erfinder: TARASINSKI, Nicolai, 67227 Frankenthal (DE); SOBOTZIK, Joachim, 67245 Lambsheim (DE); KNEER, Bernd, 68519 Viernheim (DE); GLASER, Fritz, 66482 Zweibrücken (DE)
(74) Vertreter: John Deere GmbH & Co. KG
(86) Internationale Anmeldenummer: PCT/EP2004/010089
(87) Internationale Veröffentlichungsnummer: WO 2005/037576

(56) Entgegenhaltungen:
- DE-A- 10 247 216
- US-A1- 2002 121 323
- ANONYMOUS: "Turbolader machen mobil" INTERNET ARTICLE, [Online] 20. August 1999 (1999-08-20), XP002309621 Gefunden im Internet: <URL:http://home.arcor.de/hildst/VDI0899g. html> [gefunden am 2004-12-08]
- BORGWARNER TURBO SYSTEMS: "Variable Turbinengeometrie (VTG)" INTERNET ARTICLE, [Online] Februar 2003 (2003-02), XP002309653 Gefunden im Internet: <URL:http://www.turbos.bwauto.com/de/produ cts/vtg.asp> [gefunden am 2004-12-08]

## Beschreibung

Die Erfindung betrifft eine Reifendruckeinstellanlage zur Einstellung des Drucks eines Fahrzeugreifens, mit einem als Druckluftquelle vorgesehenen Turbolader mit veränderbarer Geometrie.

Insbesondere landwirtschaftliche Fahrzeuge, wie Traktoren, Mähdrescher und Anhänger sowie vergleichbare Fahrzeuge, die auf nachgiebigem Boden eingesetzt werden, sind häufig mit großvolumigen Reifen ausgestattet, um eine gute Geländegängigkeit, gute Traktionseigenschaften und einen geringen Bodendruck zu erreichen. Traktion und Bodendruck sind besonders niedrig, wenn ein niedriger Luftdruck in den Reifen eingestellt ist, so dass im Feld ein Betrieb bei niedrigem Reifendruck bevorzugt wird. Allerdings sinkt mit abnehmendem Reifendruck das Tragvermögen der Reifen, und es nehmen der Rollwiderstand und der Reifenverschleiß zu. Daher sollte bei Transportfahrten auf unnachgiebigem Boden ein hoher Luftdruck gewählt werden. Um diesen konträren Forderungen zu genügen, werden Reifendruckregelanlagen verwendet, wie sie beispielsweise aus der DE 198 04 249 A1 oder der US 5,647,927 hervorgehen. Mit Hilfe einer Reifendruckregelanlage lässt sich der Reifenluftdruck optimal an die Erfordernisse des jeweiligen Arbeitseinsatzes anpassen. Der zum Befüllen der Reifen erforderliche Luftdruck bei diesen Reifendruckregelanlagen wird durch einen Kompressor bereitgestellt, der einen Luftdruckbehälter speist.

Aus der gattungsbildenden Druckschrift DE 101 11 532 A1 ist eine Reifendruckeinstellanlage bekannt, bei welcher der Turbolader eines Verbrennungsmotors eines Fahrzeugs als Druckquelle dient. Hierdurch kann auf bisher übliche Vorratsbehälter verzichtet werden, was erhebliche Kostenvorteile mit sich bringt. Diese Reifendruckeinstellanlage ist in der Lage, die Reifen eines Fahrzeugs ausreichend schnell zu befüllen beziehungsweise zu entleeren.

Zur schnellen Reifenbefüllung ist ein ausreichend hoher Luftdruck der Druckluftquelle erforderlich, der jedoch ohne eine zusätzliche Belastung des Verbrennungsmotors nicht ohne weiteres vom Turbolader zur Verfügung gestellt werden kann, da der Turbolader beispielsweise im Leerlauf des Verbrennungsmotors einen zu geringen Druck erzeugt. Eine ausreichende Belastung des Verbrennungsmotors könnte beispielsweise durch eine Belastung der Bordhydraulik oder des Fahrantriebs erzeugt werden. Dies wiederum ist jedoch schwierig zu realisieren, da in einem solchen Fall die Verwendung anderer Traktorfunktionen eingeschränkt sein könnten.

Die der Erfindung zugrunde liegende Aufgabe wird darin gesehen, eine Reifendruckeinstellanlage der eingangs genannten Art anzugeben, durch welche die vorgenannten Probleme überwunden werden. Insbesondere soll die zum Befüllen der Reifen erforderliche Druckluftquelle einen hohen Luftdruck und ein hohes Luftfördervolumen zur Verfügung stellen, um eine relativ schnelle Reifenbefüllung zu erzielen.

Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist die Reifendruckeinstellanlage der eingangs genannten Art gekennzeichnet durch eine von dem Verlauf des Ladeluftdrucks nach der Verdichterstufe des Turboladers abhängende Funktion, anhand derer die Verstellung der Geometrie des Turboladers erfolgt, und eine weitere von der aus der Veränderung der Geometrie des Turboladers resultierenden Drehzahl des Turboladers abhängende Funktion, wobei die Verstellung der Geometrie des Turboladers derart erfolgt, dass eine Begrenzung der Drehzahl des Turboladers bei der jeweils eingestellten Geometrie durch eine gezielte Veränderung der Geometrie des Turboladers erfolgt.

Ausgehend davon, ist daher vorgesehen, eine Funktion zu ermitteln, anhand derer die Verstellung der Geometrie des Turboladers erfolgt. Die Funktion für eine Veränderung der Geometrie des Turboladers hängt also von dem von dem Turbolader erzeugten und für die Reifendruckeinstellanlage zur Verfügung gestellten Luftdruck, gegebenenfalls vom Luftdruck in mindestens einem Reifen ab. Vorzugsweise hängt diese Funktion auch von der Zeit ab. Ganz besonders bevorzugt hängt die Funktion von dem Verlauf des Ladeluftdrucks nach der Verdichterstufe des Turboladers ab, in diesem Fall erfolgt also eine dynamische Funktionswertbestimmung.

Während des Füllvorgangs wird der Turbolader üblicherweise unter anderen Betriebsbedingungen betrieben, als im normalen Verbrennungsmotorbetrieb. Es ist daher sicherzustellen, dass keine Überlastung des Turboladers auftritt. Beispielsweise könnte eine Begrenzung der Drehzahl des Turboladers vorgesehen sein.

Nun ist die Drehzahl eines Turboladers nur schwierig und nicht unmittelbar messbar. Erfindungsgemäß ist eine weitere Funktion ermittelbar, wobei die Verstellung der Geometrie des Turboladers derart erfolgt, dass die Funktionswerte der weiteren Funktion nicht überschritten werden. Die weitere Funktion wird beispielsweise aus den gemessenen Druck- bzw. den Temperaturwerten ermittelt. Dementsprechend erfolgt eine Begrenzung der Drehzahl des Turboladers bei der jeweils eingestellten Geometrie mit Hilfe der weiteren Funktion durch eine gezielte Veränderung der Geometrie des Turboladers.

Erfindungsgemäß hängt die weitere Funktion von der aus der Veränderung der Geometrie des Turboladers resultierenden Drehzahl des Turboladers ab. Hierdurch kann bei einer entsprechenden Implementierung eine Regelung der Drehzahlbegrenzung des Turboladers durch die weitere Funktion realisiert werden.

Grundsätzlich besteht die Problematik bei der Dimensionierung eines Turboladers für einen Verbrennungsmotor darin, dass der Turbolader für alle Betriebsbedingungen des Verbrennungsmotors die jeweils erforderliche Luftverdichtung bereitstellen muss. Daher werden für die unterschiedlichen Betriebsbedingungen des Verbrennungsmotors Turbolader mit variabler Geometrie eingesetzt, was beispielsweise aus der DE 102 47 216 A1 bekannt ist.

Auch bei dem aus der DE 198 13 944 A1 bekannten Turbolader mit variabler Geometrie handelt es sich um einen Abgasturbolader, welcher im Wesentlichen aus zwei Strömungsmaschinen besteht, nämlich einer vom Abgasstrom betriebenen Turbine und einem von der Turbine angetriebenen Verdichter, welcher einen Frischluftstrom für den Verbrennungsmotor vorverdichtet. Die DE 198 13 944 A1 beschäftigt sich vor allem damit, bei tiefen Umgebungstemperaturen ideale Betriebsparameter des Verbrennungsmotors zu erreichen und eine volle Leistungsfähigkeit des Verbrennungsmotors zur Verfügung zu stellen. Ein Verstellen der Turbinengeometrie kann beispielsweise durch verstellbare Leitschaufeln der Turbine erreicht werden, wodurch der Anströmquerschnitt der Turbine und somit die vom Luftverdichter auf den Ladeluftstrom zu übertragene Staudruckenergie variiert wird.

Insoweit werden die aus dem Stand der Technik bekannten Turbolader mit variabler Geometrie ausschließlich dazu eingesetzt, in Abhängigkeit des momentanen Betriebszustands des Verbrennungsmotors Ladeluft mit einem hierfür optimalen Ladeluftdruck zur Verfügung zu stellen.

In dem Artikel "Neue Erkenntnisse bei der Entwicklung von Aufladesystemen für PKW-Motoren" der BorgWarner Turbo Systems vom 10.02.2003 wird unter anderem ein Abgasturbolader für PKW-Dieselmotoren beschrieben, mit welchem bei niedriger Motordrehzahl und geringer Abgasmenge bereits ein hoher Ladedruck erreicht werden kann, was zu einer merklichen Verbesserung des Fahrspaßes geführt hat.

Erfindungsgemäß ist erkannt worden, dass beim Befüllen eines Reifens mit Hilfe der erfindungsgemäßen Reifendruckeinstellanlage auch dann ein ausreichender Ladeluftdruck zur Verfügung gestellt werden kann, wenn der Verbrennungsmotor und damit gekoppelt auch der Turbolader nicht unter voller Last arbeitet. So könnte beispielsweise der Verbrennungsmotor im erhöhten Leerlaufdrehzahlzustand betrieben werden, wobei die Geometrie des Turboladers derart eingestellt wird, dass der Luftdruck im Ladeluftverdichterteil des Turboladers einerseits dazu ausreicht, dem Verbrennungsmotor die in diesem Betriebsmodus notwendige Verbrennungsluft bei gegebenenfalls optimalen Luftdruckverhältnissen zuzuführen und andererseits als Druckquelle der Reifendruckeinstellanlage einen Luftdruck zur Verfügung stellt, der beispielsweise 2 bar beträgt und der ein relativ schnelles Befüllen eines Rads des Fahrzeugs ermöglicht. Somit kann durch eine Verwendung eines Turboladers mit einer variablen Geometrie in ganz besonders vorteilhafter Weise auf eine Druckluftquelle, die lediglich für die Reifendruckeinstellanlage vorgesehen ist, verzichtet werden, wodurch die erfindungsgemäße Reifendruckeinstellanlage gegenüber den aus den US 5,647,927 und DE 198 13 944 A1 bekannten Reifendruckeinstellanlagen konstruktiv einfacher und vor allem kostengünstiger hergestellt werden kann. Insbesondere landwirtschaftliche oder industrielle Nutzfahrzeuge, welche üblicherweise mit einem in Form eines Dieselmotors ausgebildeten Verbrennungsmotor ausgestattet sind, umfassen einen Turbolader mit fester Geometrie. Bei solchen Fahrzeugen ist zum Implementieren einer erfindungsgemäßen Reifendruckeinstellanlage lediglich ein Turbolader mit einer variablen Geometrie vorzusehen, wobei die Mehrkosten hierfür in keinem Verhältnis zum Vorsehen einer für herkömmliche Reifendruckeinstellanlagen erforderlichen "eigenen" Druckluftquelle stehen. Gegenüber der DE 102 47 216 A1 kann ein Reifen auch dann relativ schnell belüftet werden, wenn der Verbrennungsmotor nicht voll ausgelastet ist.

Nun kann die Geometrie eines Turboladers in vielerlei Hinsicht variiert werden. Hierzu sei auf den diesbezüglichen Stand der Technik verwiesen. Insoweit können bereits auf dem Markt befindliche Turbolader mit variabler Geometrie für den hier vorliegenden Zweck eingesetzt werden. In einer bevorzugten Ausführungsform ist die Geometrie des Turboladers durch eine Verstellung der Leitbeschaufelung und/oder der Laufbeschaufelung veränderbar. Hiermit ist in ganz besonders vorteilhafter Weise eine einfache und vor allem schnelle Variation des vom Turboladers zur Verfügung gestellten Luftdrucks erzielbar.

Nun kann die Verstellung der Leitbeschaufelung und/oder der Laufbeschaufelung sich auf einen Ladeluftverdichterteil des Turboladers beziehen. Alternativ oder zusätzlich hierzu kann die Verstellung der Leitbeschaufelung und/oder der Laufbeschaufelung sich auf den Abgasturbinenteil des Turboladers beziehen.

Herkömmlicherweise kann die Verstellung der Leitbeschaufelung und/oder der Laufbeschaufelung sich auf den Abgasturbinenteil des Turboladers beziehen. Alternativ oder zusätzlich hierzu kann die Verstellung der Leitbeschaufelung und/oder der Laufbeschaufelung sich auf einen Ladeluftverdichterteil des Turboladers beziehen.

Im Konkreten ist die Veränderung der Geometrie des Turboladers mit Hilfe einer mit dem Turbolader verbundenen Unterdruckmembrandose bewirkbar. Hierzu könnte eine mit der Unterdruckmembrandose verbundene Vakuumpumpe die Unterdruckmembrandose mit Unterdruck beaufschlagen. Vorzugsweise ist die Vakuumpumpe elektrisch angetrieben, die relativ klein dimensioniert sein kann und beispielsweise mit 12 Volt und einem minimalen Restdruck von etwa 250 Millibar betreibbar ist. Die Vakuumpumpe könnte mit einem separaten Ein-/Ausschalter oder von einer entsprechenden Steuereinrichtung aktiviert beziehungsweise deaktiviert werden. Alternativ könnte die Geometrie des Turboladers mit Hilfe einer mit dem Turbolader verbundenen Unterdruckmembrandose verändert werden.

Bevorzugt ist der Über- bzw. Unterdruck zwischen der Vakuumpumpe und der Über- bzw. Unterdruckmembrandose abbaubar, so dass der Turbolader seine diesem Zustand entsprechende Geometrie einnimmt. Der Turbolader könnte also derart ausgebildet sein, dass für den Fall, in dem kein Unterdruck an der Unterdruckmembrandose anliegt, der Turbolader eine Geometrie aufweist, welche üblicherweise für einen Verbrennungsmotor in einem niedrigen Lastzustand zweckmäßig ist. Mit steigendem Unterdruck an der Unterdruckmembrandose liefert der Turbolader einen höheren Ladeluftdruck.

In einer ganz besonders bevorzugten Ausführungsform umfasst die erfindungsgemäße Reifendruckeinstellanlage eine Steuereinrichtung, mit welcher die Veränderung der Geometrie des Turboladers ansteuerbar oder regelbar ist. Diese Steuereinrichtung könnte beispielsweise in Form eines Einplatinencomputers ausgebildet sein und eine entsprechende Steuer- bzw. Regelelektronik aufweisen. In diesem Fall könnte die Steuerung bzw. Regelung mit Hilfe von elektrischen Signalen erfolgen, beispielsweise durch das Aktivieren oder Inaktivieren der obengenannten Vakuumpumpe, welche die Unterdruckmembrandose des Turboladers mit Unterdruck beaufschlagt.

Es ist wünschenswert, die Reifen in möglichst kurzer Zeit und insbesondere mit geringem Energieaufwand zu füllen. Dieses Ziel ist unter anderem von der Ausgangssituation des Befüllvorgangs abhängig, da es beispielsweise bei einem sehr niedrigen Luftdruck in den Reifen nicht sinnvoll ist, einen hohen Luftdruck am Ausgang der Verdichterturbine bereitzustellen. Denn hierdurch lässt sich die Füllzeit nicht wesentlich reduzieren und es treten allenfalls starke Drosselverluste und eine starke Erwärmung der Luft auf. Bei einem hohen Luftdruck im Reifen muss jedoch am Ausgang der Turbine ein hohes Druckniveau bereitgestellt werden, damit der Befüllvorgang zügig ablaufen kann. Die Ausgangssituation kann durch Druckmessung am Ausgang der Verdichterturbine und/oder in einem oder in mehreren Reifen, beispielsweise von der Steuereinrichtung, erfasst werden. Die Messung im Reifen könnte berührungslos mit einer Sender-Empfänger-Kombinationen erfolgen. Hierbei könnte der Drucksensor mit einem Sender im Reifen und der Empfänger am Achsgehäuse angeordnet sein.

In einer weiter bevorzugten Ausführungsform ist die momentan eingestellte Turboladergeometrie ermittelbar. Die aktuelle eingestellte Turboladergeometrie könnte beispielsweise mit Hilfe von Lage- oder Positionssensoren detektiert und vorzugsweise der Steuereinrichtung der Reifendruckeinstellanlage zugeführt werden. Insoweit kann hierdurch überprüft werden, ob die von der Steuereinrichtung eingestellte Geometrie des Turboladers auch tatsächlich vorliegt, was beispielsweise mit den Funktionswerten der weiteren Funktion verglichen werden kann.

Im Konkreten ist zum Befüllen und/oder zum Entleeren von Luft aus einem Reifen zwischen dem Turbolader und einem Rad mindestens eine Verbindungsleitung vorgesehen. Die Verbindungsleitung könnte in Form eines Leitungssystems ausgebildet sein, welches beispielsweise Verzweigungen aufweist, an welche Verbindungsleitungen hin zu den Reifen der einzelnen Räder angeschlossen werden.

Nun ist es grundsätzlich denkbar, verschiedene Ausbaustufen einer erfindungsgemäßen Reifendruckeinstellanlage vorzusehen. So könnte die Verbindungsleitung zumindest abschnittsweise dauerhaft am Fahrzeug montiert sein, wie dies beispielsweise bei Hydraulikkomponenten eines Fahrzeugs der Fall ist. In einer höchsten Ausbaustufe dieses Konzepts könnte vorgesehen sein, dass zur Übertragung der Luft zwischen dem drehbar gelagerten Rad und dem feststehenden Teil des Fahrzeugs eine Drehdurchführung vorgesehen ist. Im Hinblick auf Drehdurchführungen kann hierbei auf die aus dem Stand der Technik bekannte Technologie zurückgegriffen werden. Lediglich beispielhaft wird hierbei auf die DE 199 50 191 C1 verwiesen.

Weiterhin ist es denkbar, dass die Verbindungsleitung zumindest abschnittsweise manuell herstellbar ist. Insoweit kann bei dem Fahrzeug ein Teil der vorgesehenen Verbindungsleitungen dauerhaft am Fahrzeug montiert sein, der verbleibende Teil der Verbindungsleitung wird jedoch von einem Bediener manuell hergestellt, beispielsweise mittels flexibler Schlauchverbinder. Diese Art der Ausgestaltung eignet sich ganz besonders für eine Nachrüstung eines bereits im Einsatz befindlichen Fahrzeugs, da der dauerhaft am Fahrzeug montierte Teil der Verbindungsleitung, üblicherweise ansaugseitig zwischen Turboladers und Verbrennungsmotor beginnend, relativ leicht nachrüstbar ist, wohingegen eine Nachrüstung einer Drehdurchführung zwischen Rad und Achse mit erheblich größeren Aufwand verbunden ist.

So könnte ein Ende eines Schlauchverbinders an einem radseitig vorgesehenen Kupplungssystem reversibel anschließbar sein. Bei diesem Kupplungssystem handelt es sich vorzugsweise um ein Schnellkupplungssystem, so dass der Fahrzeugbediener die Schlauchverbindung manuell mit nur wenigen Handgriffen schnell und unkompliziert herstellen kann. Das andere Ende eines Schlauchverbinders könnte an einem fahrzeugseitig vorgesehenen Kupplungsanschluss anschließbar sein. Dieser fahrzeugseitige Kupplungsanschluss könnte der Verbindungsleitung der Reifendruckeinstellanlage zugeordnet sein. Nun könnte das dem fahrzeugseitigen Kupplungsanschluss zugeordnete Ende des Schlauchverbinders ebenfalls mit einem Schnellkupplungssystem ausgestattet sein, so dass beispielsweise beide Enden eines Schlauchverbinders manuell vom Fahrzeugbediener herzustellen sind, einerseits am Kupplungsanschluss und andererseits am Rad. In diesem Fall ist das fahrzeugseitige Ende des Schlauchverbinders ebenfalls reversibel am Kupplungsanschluss anschließbar. Andererseits könnte das fahrzeugseitige Ende des Schlauchverbinders dauerhaft mit dem Kupplungssystem verbunden sein, so dass ein Fahrzeugbediener lediglich das radseitige Ende des Schlauchverbinders zur Reifenbefüllung bzw. Reifenentlüftung herstellen muss. Bei dieser Ausführungsform können die fahrzeugseitigen Schnellkupplungen eingespart werden und die Schlauchverbinder werden dann, wenn keine Befüllung bzw. Entleerung der Reifen stattfindet, in einer entsprechenden Halterung am Fahrzeug aufbewahrt.

In einer bevorzugten Ausführungsform, bei welcher ein Schlauchverbinder mindestens ein Ende mit einem Kupplungssystem beziehungsweise mit einem Schnellkupplungssystem ausgestattet sind, weist mindestens ein Ende eines Schlauchverbinders eine selbstabsperrende Schnellverschlusskupplung auf, welche in dem am Kupplungsanschluss angekoppelten Zustand nicht abgesperrt ist. Insoweit dichtet eine solche Schnellverschlusskupplung selbsttätig ab, so dass beispielsweise unmittelbar nach dem Abziehen eines Schnellverschlusses am Rad des Fahrzeugs einerseits keine Luft aus dem Reifen und andererseits keine gegebenenfalls noch unter Druck stehende Luft aus der Reifendruckeinstellanlage nach außen entweichen kann.

Zum Erzielen einer hinreichend schnellen Reifenbefüllung bzw. Reifenentleerung weist ein Schlauchverbinder und/oder eine Verbindungsleitung der Reifendruckeinstellanlage mindestens einen Querschnitt bzw. einen lichten Durchmesser von ½ Zoll, d.h. ungefähr 1,3 cm, auf. Bei einem solchen Querschnitt der Leitung ergeben sich kaum Drosselverluste bzw. Temperaturerhöhungen der Leitungsteile.

In einer ganz besonders bevorzugten Ausführungsform der erfindungsgemäßen Reifendruckeinstellanlage ist ein Mittel vorgesehen, mit welchem der Luftdruck der in einen Reifen transportierten Luft nach oben begrenzbar ist. Ein solches Mittel könnte beispielsweise einen automatisch betätigbaren Druckschalter aufweisen, der die Verbindung zwischen Turbolader und Reifen dann unterbricht, wenn der Luftdruck einen vorgebbaren Wert überschreitet. Eine obere Luftdruckgrenze könnte beispielsweise 1,6 bar sein. Hierdurch wird verhindert, dass im Extremfall der Reifen platzt.

Weiterhin könnte ein Mittel vorgesehen sein, mit welchem der Luftdruck der aus einem Reifen transportierten Luft nach unten begrenzbar ist. Auch dieses Mittel könnte beispielsweise einen automatisch betätigbaren Druckschalter aufweisen, welcher die Verbindung zwischen Reifen und der Umgebung dann unterbricht, wenn der Luftdruck einen vorgebbaren Wert unterschreitet. Hierdurch wird insbesondere verhindert, dass bei einer Reifenentleerung der Reifen völlig entleert wird und das Fahrzeug auf die Felgen abgesenkt wird. Eine untere Luftdruckgrenze könnte beispielsweise ein Wert von 0,3 bar sein.

Im Konkreten könnte zwischen dem Turbolader und einem Reifen ein Rückschlagventil vorgesehen sein. Dieses Rückschlagventil verhindert, dass ein von dem Reifen kommender Überdruck auf den Turbolader wirkt bzw. dass eine Reifenbefüllung erst dann eintritt, wenn der turboladerseitige Luftdruck einen höheren Wert aufweist als der radseitige Luftdruck.
In einer bevorzugten Ausführungsform ist ein Mittel zum Dämpfen des Schalls vorgesehen, welcher auftritt, wenn Luft aus den Reifen entleert wird. Ein hoher Lärmbeitrag wird insbesondere bei einer schnellen Entlüftung eines Reifens auftreten, wenn also ein großes Luftvolumen durch eine Schlauchverbindung bzw. durch eine Verbindungsleitung in die Umgebung entweicht. Vorzugsweise weist das Mittel zum Dämpfen des Schalls ein Druckbegrenzungsventil auf.

Insbesondere zur Kontrolle durch den Fahrzeugbediener ist in einer bevorzugten Ausführungsform ein Manometer vorgesehen, welches den in der Reifendruckeinstellanlage bzw. in dem Reifen vorliegenden Luftdruck anzeigt.

In einer bevorzugten Ausführungsform ist die erfindungsgemäße Reifendruckeinstellanlage derart ausgebildet, dass jeder Reifen des Fahrzeugs mit einem unterschiedlichen Luftdruck eingestellt werden kann. Vorzugsweise ist vorgesehen, dass die jeder Achse des Fahrzeugs zugeordneten Reifen im Wesentlichen den gleichen Luftdruck aufweisen.

Weiterhin könnte vorgesehen sein, dass mit der Reifendruckeinstellanlage des Fahrzeugs auch der Luftdruck der Reifen eines an dem Fahrzeug ankoppelbaren Anhängers einstellbar ist. Insoweit kann hierdurch in besonders vorteilhafter Weise der Reifendruck des gesamten Gespanns auf die jeweilige Arbeitssituation eingestellt werden. Vorzugsweise ist der Luftdruck eines Reifens des Anhängers unterschiedlich zu dem Luftdruck eines Reifens des Fahrzeugs einstellbar. Hierdurch kann beispielsweise der Luftdruck der Reifen des Anhängers auf die Ladesituation beziehungsweise auf das momentan vorliegende Gewicht des Anhängers eingestellt werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen jeweils in einer schematischen Darstellung
- Fig. 1: ein erstes Ausführungsbeispiel der vorliegenden Erfindung,
- Fig. 2: ein zweites Ausführungsbeispiel der vorliegenden Erfindung und
- Fig. 3: ein zur Fig. 2 abgewandeltes Ausführungsbeispiel.

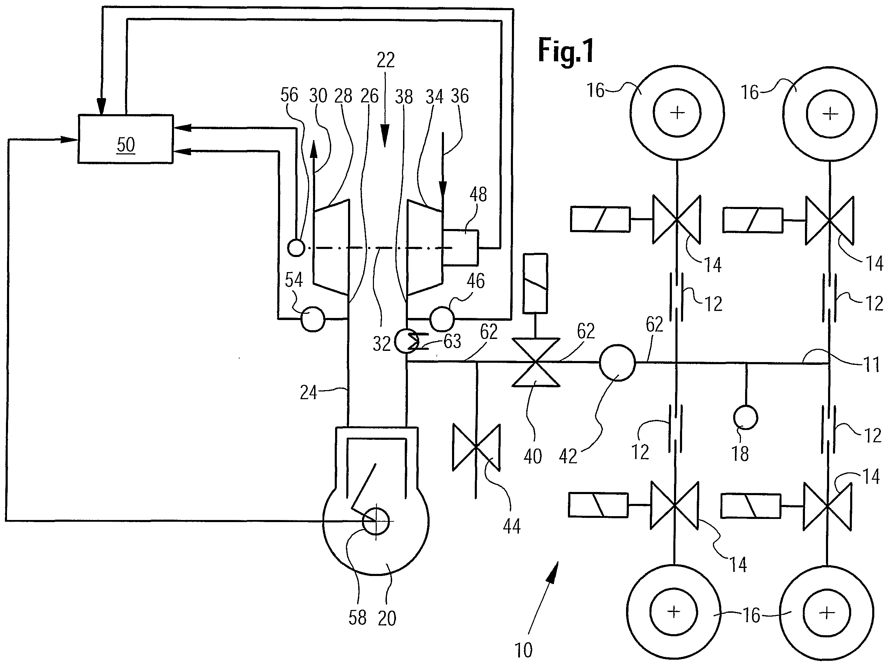

Die im rechten Bildteil der Fig. 1 dargestellte Reifendruckeinstellanlage 10 enthält eine Verteilerleitung 11, auch Druckleitung genannt, die über je eine Drehdurchführung 12 und ein zugehöriges Ventil 14 mit den vier Reifen 16 eines nicht näher dargestellten Arbeitsfahrzeugs in Verbindung steht. Die Drehdurchführungen 12 und Ventile 14 können auf übliche Weise ausgebildet sein. Beispielsweise können die Ventile 14 Wegeventile sein. Es kann auch eine den Durchführungen vorgelagerte weitere Ventilanordnung zur Aufbereitung des Versorgungsdrucks vorgesehen sein, die jedoch nicht dargestellt wurde, weil sie nicht Gegenstand der vorliegenden Erfindung ist. In der Druckleitung 11 ist eine Druckmessstelle 18 vorgesehen.

Im linken Bildteil der Figur ist ein Verbrennungsmotor 20 angedeutet, welcher mit einem Abgasturbolader 22 ausgestattet ist. An den Anschlüsskrümmer 24 des Verbrennungsmotor 20 ist der Abgasstrang 26 des Turboladers 22 angeschlossen. Die im Abgasstrang 26 liegende Abgasturbine 28 des Turboladers 22 wird durch das Motorabgas angetrieben, welches durch das Abgasrohr 30 ins Freie tritt. Die Abgasturbine 28 treibt über eine Welle 32 den Ladeluftverdichter 34 des Turboladers 22 an. Der Ladeluftverdichter 34 saugt über den Eintritt 36 Frischluft aus der Atmosphäre an, verdichtet diese und gibt sie über einen Ladeluftkanal 38 an die Verbrennungskraftmaschine 20 ab.

Der Ladeluftkanal 38 steht über ein Verbindungsventil 40 und einen Nachverdichter 42 mit der Druckleitung 11 der Reifendruckeinstellanlage 10 in Verbindung. Der Nachverdichter 42 ist bei den meisten Anwendungsfällen entbehrlich, da der Turbolader 22 in der Regel in der Lage ist, einen ausreichend hohen Druck für die Reifendruckeinstellanlage 10 bereitzustellen. Falls erforderlich kann als Nachverdichter 42 ein üblicher Kompressor eingesetzt werden. Das Verbindungsventil 40 lässt sich elektromagnetisch ansteuern und ist geschlossen, wenn kein elektrisches Signal ansteht. Es kann als Druckregelventil ausgelegt sein, um den Druck für die Reifendruckeinstellanlage 10 optimal einzustellen.

Am Ladeluftkanal 38 ist ein sogenanntes Waste-Gate-Ventil 44 angeschlossen, durch welches sich der Betriebspunkt der Verbrennungskraftmaschine 20 optimal einstellen lässt. Zur Drucküberwachung im Ladeluftkanal 38 ist ein Drucksensor 46 vorgesehen, dessen Drucksignale unter anderem dazu verwendet werden, um die Motordrehzahl anzupassen. Wenn eine Reifenbefüllung erfolgt, wird die Motordrehzahl derart eingestellt, dass der Turbolader 22 einen ausreichenden Fülldruck zur Verfügung stellt.

Erfindungsgemäß ist die in Fig. 1 gezeigte Reifendruckeinstellanlage mit einem Turbolader 22 als Druckluftquelle ausgestattet, welcher eine veränderbare Geometrie aufweist. Die Veränderung der Geometrie des Turboladers bezieht sich die Verstellung der Leitbeschaufelung und der Laufbeschaufelung des Ladeluftverdichters 34, welche nicht im Detail gezeigt ist. Im Konkreten wird die Veränderung der Geometrie des Turboladers 22 mit Hilfe einer Unterdruckmembrandose 48 bewirkt. Die Unterdruckmembrandose 48 wird elektrisch von der der Reifendruckeinstellanlage zugeordneten Steuereinrichtung 50 angesteuert bzw. elektrisch angetrieben.

Die Reifendruckeinstellanlage umfasst mehrere Sensoren 46, 54 und 56, wobei der Sensoren 46 und 54 jeweils den Druck ansaugseitig bzw. abgasseitig des Verbrennungsmotors 20 detektieren und in Abhängigkeit des detektierten Drucks elektrische Signale erzeugen, welche der Steuereinrichtung 50 zugeleitet werden. Der Drehzahlsensor 56 detektiert die Drehzahl des Turboladers 22 und leitet ebenfalls die in Abhängigkeit der Drehzahl des Turboladers 22 erzeugten elektrischen Signale der Steuereinrichtung 50 zu. Weiterhin ist ein Drehzahlsensor 58 des Verbrennungsmotors 20 vorgesehen. Dieser erzeugt in Abhängigkeit der von ihm detektierten Drehzahl des Verbrennungsmotors 20 elektrische Signale und leitet diesem der Steuereinrichtung 50 zu.

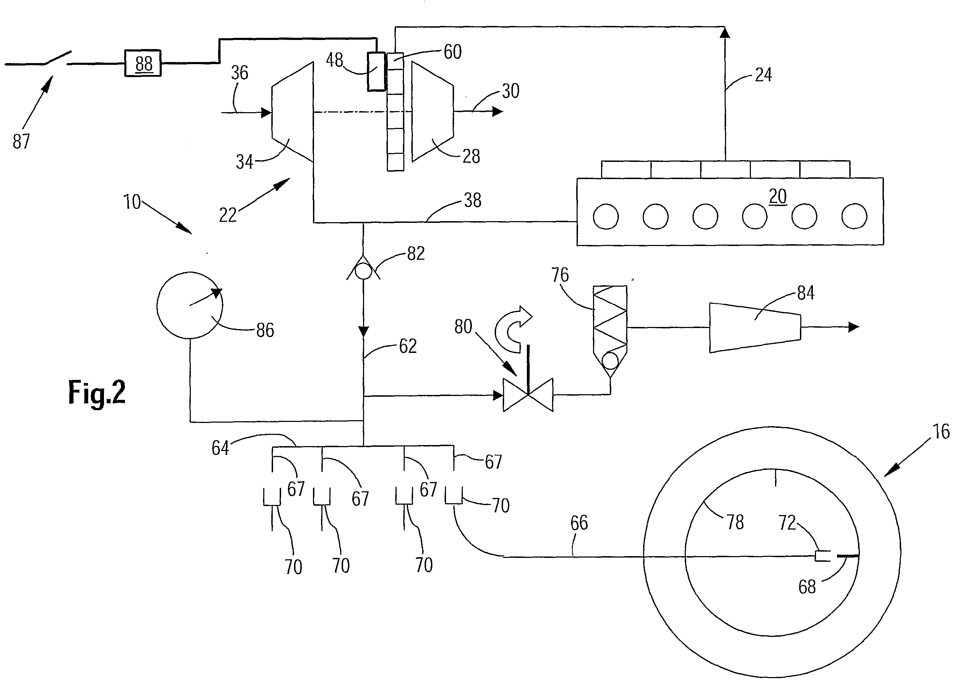

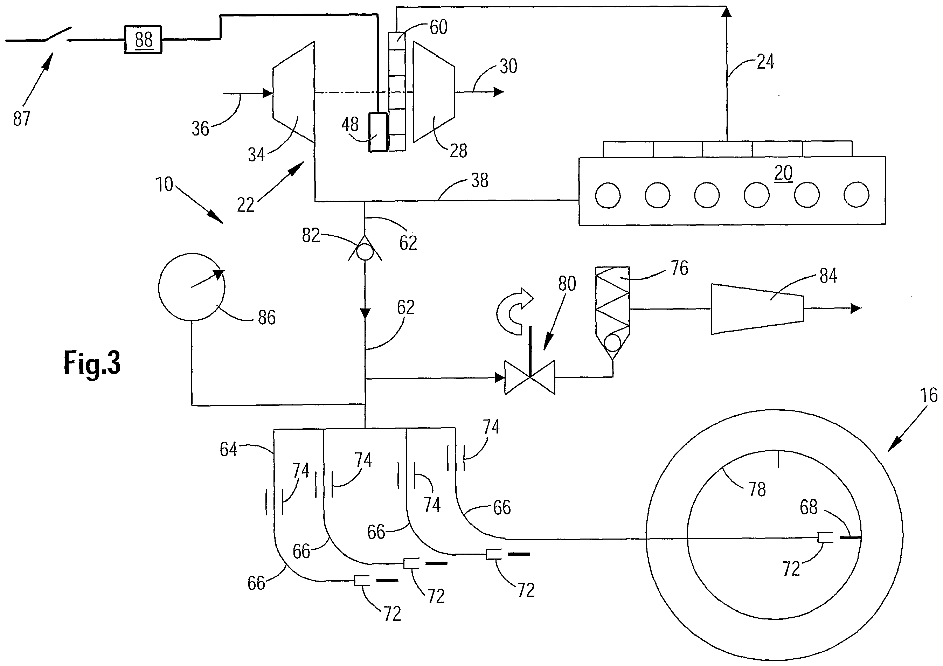

Die Fig. 2 und 3 zeigen jeweils ein weiteres Ausführungsbeispiel der vorliegenden Erfindung, wobei in den Fig. 1 bis 3 gleiche oder ähnliche Bauteile mit gleichen Bezugszeichen gekennzeichnet sind. So ist beispielsweise die in den Fig. 2 und 3 gezeigte Anordnung des Turboladers 22 und des Verbrennungsmotors 20 vergleichbar zu der in Fig. 1 gezeigten Anordnung. In den Fig. 2 und 3 sind die abgasseitigen Leitschaufeln 60 des Turboladers 22 gezeigt, welche variabel ausgebildet sind.

Die von dem Ladeluftverdichter 34 zugeführte und komprimierte Luft wird einerseits über den Ladeluftkanal 38 dem Verbrennungsmotor 20 zugeführt und ist andererseits über die Verbindungsleitung 62 dem Reifen 16 zuführbar. Die vom Ladeluftverdichter 34 komprimierte Ladeluft wird mit dem in Fig. 1 gezeigten Ladeluftkühler 63 heruntergekühlt.

Bei dem Ausführungsbeispiel gemäß Fig. 2 ist die Verbindungsleitung 62 bis zum Kupplungsanschluss 64 dauerhaft am Fahrzeug montiert. Der Kopplungsanschluss 62 ist in Form eines Verteilerkastens ausgebildet, welcher vier Schnellverschlusskupplungen 67 aufweist, an welche die einzelnen Schlauchverbinder 66 fahrzeugseitig angeschlossen werden, falls die Reifen zu Befüllen oder zu Entleeren sind. Radseitig wird jeweils ein Schlauchverbinder 66 an ein Ventil 68 eines Reifens 16 angeschlossen. Hierbei befindet sich das Fahrzeug im Stillstand. Das fahrzeugseitige Ende 70 des Schlauchverbinders 66 sowie das radseitige Ende 72 des Schlauchverbinders 66 umfasst eine Schnellverschlusskupplung, welche selbstverschließend auf ein in der Felge eingeschweißtes Rohr mit Gewinde aufschraubbar ist bzw. an einer Schnellverschlusskupplung 67 fahrzeugseitig angeschlossen wird.

In Fig. 3 ist gezeigt, dass am Verteilerkasten mit dem fahrzeugseitigen Kupplungsanschluss 64 fest montierte Übergänge 74 zwischen der Verbindungsleitung 62 und den Schlauchverbindern 66 vorgesehen sind. Insoweit ist zum Befüllen beziehungsweise zum Entleeren der Reifen 16 lediglich die radseitige Verbindung zwischen dem radseitiges Ende 72 des Schlauchverbinders 66 und dem jeweiligen Ventil 68 eines Reifens 16 herzustellen. Dementsprechend sind die Schlauchverbindungen 66 aus dem Ausführungsbeispiel gemäß Fig. 3 mit dem Fahrzeug fest verbunden und werden während der normalen Fahrt in entsprechenden, nicht in Fig. 3 gezeigten Halterungen am Fahrzeug aufbewahrt.

Anstelle der vier in Fig. 2 gezeigten Schnellverschlusskupplungen 67 und Schlauchverbinder 66 und anstelle der vier in Fig. 2 gezeigten Übergänge 74 und Schlauchverbinder 66 kann auch nur lediglich jeweils ein Schlauchverbinder vorgesehen sein. In diesem Fall müssen die Reifen 16 des Fahrzeugs nacheinander befüllt bzw. entleert werden.

Beim Entleeren von Luft aus dem Reifen 16 verhindert das Druckbegrenzungsventil 76 einen Druckabfall unter einen vorgebbaren Wert, der im hier vorliegenden Fall auf 0,3 bar eingestellt ist. Insoweit wird hierdurch verhindert, dass der Reifen 16 vollständig entleert wird und somit ein Felgen 78 eines Rads auf dem Boden aufsetzt. Zum Entleeren wird und das Magnetventil 80 geöffnet.

Zwischen dem Verteilerkasten 64 und dem Ladeluftkanal 38 ist ein Rückschlagventil 82 vorgesehen, welches verhindert, dass ein von einem Reifen 16 kommender Überdruck auf den Turbolader 22 wirkt. Beim Entleervorgang eines Reifens 16 wird mit dem Schalldämpfer 84 die Lautstärke der aus dem Leitungssystem austretenden Luft gedämpft.

Mit einem Manometer 86 wird der in der erfindungsgemäßen Reifendruckeinstellanlage momentan vorherrschende Luftdruck einem Bediener angezeigt. Insoweit ist hierdurch eine Kontrollmöglichkeit durch den Bediener des Betriebs der erfindungsgemäßen Reifendruckeinstellanlage realisiert.
Im Folgenden werden die Arbeitsschritte beschriebenen, welche von einem Fahrzeugbediener bzw. von der erfindungsgemäßen Reifendruckeinstellanlage gemäß Fig. 2 auszuführen sind, um eine Reifenluftdruckerhöhung zu erzielen. So werden vom Fahrzeugbediener bis zu vier, zu Kreisringen aufgerollte Schlauchverbinder 66 aus den hierfür am Fahrzeug vorgesehenen Staubehälter entnommen und einerseits an die Schnellverschlusskupplung 67 und andererseits an das Ventil 68 angeschlossen. Sodann wird das Fahrzeug mit Standgas auf Hochleerlauf gebracht, wobei der Verbrennungsmotor 20 dann eine Drehzahl von größer als 2000 Umdrehungen pro Minute aufweist. Durch das Betätigen des Schalters 87 wird die Vakuumpumpe 88 eingeschaltet, welche die Unterdruckmembrandose 48 mit Unterdruck beaufschlagt, so dass die Leitschaufeln 60 des Turboladers 22 in ihrer Geometrie verändert werden. Hierdurch wird die Frischluftverdichtung des Turboladers 22 erhöht. Nachdem der gewünschte Luftdruck in den Reifen 16 des Fahrzeugs aufgebaut ist, was der Fahrzeugbediener an Hand des Manometers 86 überprüft, wird der Schalter 87 erneut betätigt, so dass die Leitschaufeln 60 des Turboladers 22 in ihre ursprüngliche Geometrie zurückkehren. Hierbei wird das Standgas wieder in den normalen Lehrlauf gebracht. Die Dauer zum Auffüllen von vier Reifen auf einen Luftdruck von ca. 1,6 bar beträgt mit der erfindungsgemäßen Reifendruckeinstellanlage bei einem in Form eines Traktors ausgebildeten Fahrzeug weniger als 2 min. Schließlich sind in die Schlauchverbinder 66 fahrzeugseitig wie auch radseitig abzukoppeln und in den entsprechenden Staubehälter zu verstauen. Sodann ist das Fahrzeug fahrbereit.

Die zur Entleerung bzw. zur Reifenluftdruckabsenkung vorgesehenen Arbeitsschritte unterscheiden sich von den soeben beschriebenen im Wesentlichen dadurch, dass nach dem Herstellen der Verbindung der Verbindungsleitung 62 mit den Schlauchverbindern 66 das Magnetventil 80 geöffnet wird und der Fahrzeugbediener den abfallenden Druckverlauf am Manometer 86 beobachtet. Falls der gewünschte Luftdruck erreicht ist, wird das Magnetventil 80 geschlossen. Hierbei kann bei einem Traktor eine Entleerzeit der vier Reifen 16 von weniger als eine Minute erzielt werden.

## Patentansprüche

1. Reifendruckeinstellanlage zur Einstellung des Drucks eines Fahrzeugreifens (16), mit einem als Druckluftquelle vorgesehenen Turbolader (22) mit veränderbarer Geometrie, **gekennzeichnet durch**
eine von dem Verlauf des Ladeluftdrucks nach der Verdichterstufe des Turboladers (22) abhängende Funktion, anhand derer die Verstellung der Geometrie des Turboladers (22) erfolgt, und
eine weitere von der aus der Veränderung der Geometrie des Turboladers (22) resultierenden Drehzahl des Turboladers (22) abhängende Funktion, wobei die Verstellung der Geometrie des Turboladers (22) derart erfolgt, dass eine Begrenzung der Drehzahl des Turboladers (22) bei der jeweils eingestellten Geometrie durch eine gezielte Veränderung der Geometrie des Turboladers (22) erfolgt.

2. Reifendruckeinstellanlage nach Anspruch 1, **dadurch gekennzeichnet, dass** die Geometrie des Turboladers (22) durch eine Verstellung der Leitbeschaufelung (60) und/oder der Laufbeschaufelung veränderbar ist.

3. Reifendruckeinstellanlage nach Anspruch 1 oder 2, **dadurch gekennzeichnet, dass** die Verstellung der Leitbeschaufelung und/oder der Laufbeschaufelung sich auf einen Ladeluftverdichterteil des Turboladers (22) bezieht.

4. Reifendruckeinstellanlage nach einem der Ansprüche 1 bis 3, **dadurch gekennzeichnet, dass** die Verstellung der Leitbeschaufelung (60) und/oder der Laufbeschaufelung sich auf den Abgasturbinenteil des Turboladers (22) bezieht.

5. Reifendruckeinstellanlage nach einem der Ansprüche 1 bis 4, **dadurch gekennzeichnet, dass** die Veränderung der Geometrie des Turboladers (22) mit Hilfe einer mit dem Turbolader (22) verbundenen Über- oder Unterdruckmembrandose (48) bewirkbar ist, wobei vorzugsweise eine mit einer Unterdruckmembrandose (48) verbundene - vorzugsweise elektrisch angetriebene - Vakuumpumpe (88) die Unterdruckmembrandose (48) mit Unterdruck beaufschlagt und dass der Überdruck bzw. Unterdruck zwischen der Vakuumpumpe (88) und der Über- bzw. Unterdruckmembrandose (48) abbaubar sein könnte, so dass der Turbolader (22) seine diesem Zustand entsprechende Geometrie einnimmt.

6. Reifendruckeinstellanlage nach einem der Ansprüche 1 bis 5, **gekennzeichnet durch** eine Steuereinrichtung (50), mit welcher die Veränderung der Geometrie des Turboladers (22) ansteuerbar oder regelbar ist, vorzugsweise mit Hilfe von elektrischen Signalen.

7. Reifendruckeinstellanlage nach einem der Ansprüche 1 bis 6, **dadurch gekennzeichnet, dass** zum Befüllen eines Reifens (16) mit Luft und/oder zum Entleeren von Luft aus einem Reifen (16) zwischen dem Turbolader (22) und einem Rad mindestens eine Verbindungsleitung (11; 62, 66) vorgesehen ist.

8. Reifendruckeinstellanlage nach einem der Ansprüche 1 bis 7, **dadurch gekennzeichnet, dass** ein Mittel (44) vorgesehen ist, mit welchem der Luftdruck der in einen Reifen (16) transportierten Luft nach oben begrenzbar ist, vorzugsweise mittels eines automatisch betätigbaren Druckschalters.

9. Reifendruckeinstellanlage nach einem der Ansprüche 1 bis 8, **dadurch gekennzeichnet, dass** ein Mittel (76) vorgesehen ist, mit welchem der Luftdruck der aus einem Reifen transportierten Luft nach unten begrenzbar ist, vorzugsweise mittels eines automatisch betätigbaren Druckschalters, und/oder dass zwischen dem Turbolader (22) und einem Reifen (16) ein Rückschlagventil (82) vorgesehen ist, welches verhindert, dass ein von dem Reifen (16) kommender Überdruck auf den Turbolader (22) wirkt.

10. Reifendruckeinstellanlage nach einem der Ansprüche 1 bis 9, **dadurch gekennzeichnet, dass** ein Mittel (84) zum Dämpfen des Schalls vorgesehen ist, welcher auftritt, wenn Luft aus den Reifen (16) entleert wird, wobei das Mittel (84) zum Dämpfen des Schalls vorzugsweise ein Druckbegrenzungsventil aufweist.

## Claims

1. Tyre pressure setting system for setting the pressure of a vehicle tyre (16), having a variable-geometry turbocharger (22) provided as a compressed-air source, **characterized by**
a function which is dependent on the profile of the charge-air pressure downstream of the compressor stage of the turbocharger (22) and on the basis of which the adjustment of the geometry of the turbocharger (22) is performed, and
a further function which is dependent on the rotational speed of the turbocharger (22) resulting from the variation of the geometry of the turbocharger (22), wherein the adjustment of the geometry of the turbocharger (22) is performed such that a limitation of the rotational speed of the turbocharger (22) in the case of the respectively set geometry is performed by means of a targeted variation of the geometry of the turbocharger (22).

2. Tyre pressure setting system according to Claim 1, **characterized in that** the geometry of the turbocharger (22) is variable by means of an adjustment of the guide blade arrangement (60) and/or of the rotor blade arrangement.

3. Tyre pressure setting system according to Claim 1 or 2, **characterized in that** the adjustment of the guide blade arrangement and/or of the rotor blade arrangement relates to a charge-air compressor part of the turbocharger (22).

4. Tyre pressure setting system according to any of Claims 1 to 3, **characterized in that** the adjustment of the guide blade arrangement (60) and/or of the rotor blade arrangement relates to the exhaust-gas turbine part of the turbocharger (22) .

5. Tyre pressure setting system according to any of Claims 1 to 4, **characterized in that** the variation of the geometry of the turbocharger (22) can be effected by means of a positive-pressure or negative-pressure diaphragm cell (48) connected to the turbocharger (22), wherein preferably, a-preferably electrically driven - vacuum pump (88) connected to a negative-pressure diaphragm cell (48) applies a negative pressure to the negative-pressure diaphragm cell (48), and **in that** the positive pressure or negative pressure between the vacuum pump (88) and the positive-pressure or negative-pressure diaphragm cell (48) could be dissipatable such that the turbocharger (22) assumes its geometry corresponding to this state.

6. Tyre pressure setting system according to any of Claims 1 to 5, **characterized by** a control device (50) by means of which the variation of the geometry of the turbocharger (22) is activatable or controllable, preferably by means of electrical signals.

7. Tyre pressure setting system according to any of Claims 1 to 6, **characterized in that**, for the filling of a tyre (16) with air and/or for the evacuation of air from a tyre (16), at least one connecting line (11; 62, 66) is provided between the turbocharger (22) and a wheel.

8. Tyre pressure setting system according to any of Claims 1 to 7, **characterized in that** a means (44) is provided by which the air pressure of the air transported into a tyre (16) can be upwardly limited, preferably by means of an automatically activatable pressure switch.

9. Tyre pressure setting system according to any of Claims 1 to 8, **characterized in that** a means (76) is provided by which the air pressure of the air transported out of a tyre can be downwardly limited, preferably by means of an automatically activatable pressure switch, and/or **in that**, between the turbocharger (22) and a tyre (16), there is provided a check valve (82) which prevents a positive pressure originating from the tyre (16) from acting on the turbocharger (22).

10. Tyre pressure setting system according to any of Claims 1 to 9, **characterized in that** a means (84) is provided for damping the sound that occurs when air is evacuated out of the tyre (16), wherein the means (84) for damping the sound preferably has a pressure-limiting valve.

## Revendications

1. Système de régulation de la pression de pneus servant à la régulation de la pression d'un pneu de véhicule (16), comprenant un turbocompresseur (22) à géométrie modifiable prévu en tant que source d'air comprimé, **caractérisé par**
une fonction dépendant de la variation de la pression d'air de suralimentation après l'étage de compresseur du turbocompresseur (22), fonction sur la base de laquelle s'effectue le réglage de la géométrie du turbocompresseur (22), et
une autre fonction dépendant de la vitesse de rotation du turbocompresseur (22) résultant de la modification de la géométrie du turbocompresseur (22), le réglage de la géométrie du turbocompresseur (22) s'effectuant de telle sorte qu'une limitation de la vitesse de rotation du turbocompresseur (22) dans le cas de la géométrie respectivement réglée s'effectue par une modification ciblée de la géométrie du turbocompresseur (22).

2. Système de régulation de la pression de pneus selon la revendication 1, **caractérisé en ce que** la géométrie du turbocompresseur (22) peut être modifiée par un réglage de l'aubage directeur (60) et/ou de l'aubage mobile.

3. Système de régulation de la pression de pneus selon la revendication 1 ou 2, **caractérisé en ce que** le réglage de l'aubage directeur et/ou de l'aubage mobile se rapporte à une partie compresseur d'air de suralimentation du turbocompresseur (22).

4. Système de régulation de la pression de pneus selon l'une quelconque des revendications 1 à 3, **caractérisé en ce que** le réglage de l'aubage directeur (60) et/ou de l'aubage mobile se rapporte à une partie turbine à gaz d'échappement du turbocompresseur (22).

5. Système de régulation de la pression de pneus selon l'une quelconque des revendications 1 à 4, **caractérisé en ce que** la modification de la géométrie du turbocompresseur (22) peut être produite à l'aide d'une capsule à membrane à surpression ou à dépression (48) reliée au turbocompresseur (22), une pompe à vide (88) de préférence entraînée électriquement et de préférence reliée à une capsule à membrane à dépression (48) soumettant la capsule à membrane à dépression (48) à une dépression, et **en ce que** la surpression ou la dépression entre la pompe à vide (88) et la capsule à membrane à surpression ou à dépression (48) pourrait être réduite, de telle sorte que le turbocompresseur (22) adopte sa géométrie correspondant à cet état.

6. Système de régulation de la pression de pneus selon l'une quelconque des revendications 1 à 5, **caractérisé par** un dispositif de commande (50) à l'aide duquel la modification de la géométrie du turbocompresseur (22) peut être commandée ou régulée, de préférence à l'aide de signaux électriques.

7. Système de régulation de la pression de pneus selon l'une quelconque des revendications 1 à 6, **caractérisé en ce qu'**au moins une conduite de liaison (11 ; 62, 66) est prévue entre le turbocompresseur (22) et une roue pour remplir un pneu (16) d'air et/ou pour évacuer de l'air hors d'un pneu (16).

8. Système de régulation de la pression de pneus selon l'une quelconque des revendications 1 à 7, **caractérisé en ce qu'**un moyen (44) est prévu, à l'aide duquel la pression de l'air transporté dans un pneu (16) peut être limitée vers le haut, de préférence au moyen d'un commutateur à pression pouvant être actionné automatiquement.

9. Système de régulation de la pression de pneus selon l'une quelconque des revendications 1 à 8, **caractérisé en ce qu'**un moyen (76) est prévu, à l'aide duquel la pression de l'air transporté hors d'un pneu peut être limitée vers le bas, de préférence au moyen d'un commutateur à pression pouvant être actionné automatiquement et/ou **en ce qu'**une soupape anti-retour (82) est prévue entre le turbocompresseur (22) et un pneu (16), laquelle empêche qu'une surpression provenant du pneu (16) n'agisse sur le turbocompresseur (22).

10. Système de régulation de la pression de pneus selon l'une quelconque des revendications 1 à 9, **caractérisé en ce qu'**un moyen (84) d'amortissement du bruit est prévu, lequel intervient lorsque de l'air est évacué du pneu (16), le moyen (84) d'amortissement du bruit comprenant de préférence une soupape de limitation de pression.
